# EUROPÄISCHE PATENTSCHRIFT

(11) **EP 1 892 326 B1**
(45) Veröffentlichungstag und Bekanntmachung des Hinweises auf die Patenterteilung: **18.05.2011**
(21) Anmeldenummer: 07015567.6
(22) Anmeldetag: 08.08.2007
(51) Int. Cl.: D06F 37/22, D06F 37/26, F16F 9/54

(54) **Kunststofflaugenbehälter für eine Waschmaschine mit Anbindung für Schwingungsdämpfer**
Plastic tub for a washing machine with a connection for a vibration damper
Cuve de lavage en plastique pour un lave-linge avec un raccordement pour un amortisseur d'oscillations

(30) Priorität: 21.08.2006 DE 102006038960
(43) Veröffentlichungstag der Anmeldung: 27.02.2008
(73) Patentinhaber: Miele & Cie. KG, 33332 Gütersloh (DE)
(72) Erfinder: Eckert, Norbert, 33102 Paderborn (DE); Fechtel, Benedikt, 33378 Rheda-Wiedenbrück (DE)

(56) Entgegenhaltungen:
- DE-A1- 19 725 706

## Beschreibung

Die Erfindung betrifft einen Kunststofflaugenbehälter für eine Waschmaschine, in dessen horizontaler Achse eine angetriebene Waschtrommel drehbar gelagert ist, und der Kunststofflaugenbehälter schwingungsbeweglich in dem Maschinengehäuse angeordnet ist, wobei zur Befestigung wenigstens eines Schwingungsdämpfers an dem Kunststofflaugenbehälter zwei Laschen vorgesehen sind, durch welche fluchtende Bohrungen verlaufen, wobei zwischen den Laschen ein Befestigungsauge des Schwingungsdämpfers angeordnet ist, und zur Festlegung des Schwingungsdämpfers ein die Bohrungen und das Befestigungsauge durchsetzendes Befestigungselement an den Laschen angeordnet ist.

Schwingungsdämpfer an schwingenden Aggregaten von Waschautomaten haben die Aufgabe in ihrer Wirkungsrichtung die Bewegung bei Unwucht durch Wäsche zu dämpfen und ein Anschlagen oder den Versatz des Gerätes zu verhindern. Torsionsbewegungen des Laugenbehälters um die Trommelachse werden jedoch nur durch die damit verbundene Verschiebung des Befestigungspunktes in die Stoßdämpfer eingeleitet. Die Befestigungspunkte des Dämpfers am Laugenbehälter und an der gehäuseseitigen Befestigung können auch Drehmomente übertragen. Bei Stahlaggregaten und Bodenwannen ist die Übertragungsmöglichkeit durch eine stark angeschraubte Verbindung gegeben, die über die Vorspannkraft eine kraftschlüssige Verbindung erzeugt. Das ist in dieser Form bei Kunststoffelementen nicht durchführbar, da die erforderliche Kraft den Kunststoff schädigen würde und seine Relaxaktion ein schnelles Absinken der Vorspannung zur Folge hat.

Um insbesondere eine möglichst schwingungsgedämpfte Schwenkachse zu erhalten, wird im Stand der Technik, gemäß der DE 197 25 706 A1, eine Befestigungseinrichtung offenbart, bei der das Befestigungselement aus zwei quer zur Schwenkachse angeordneten aufspreizbaren Hülsensegmenten besteht. Auch wenn infolge der Aufspreizung des Befestigungselementes eine gewisse Versteifung der Schwenkachse gegeben ist, so ist diese bekannte Spreizhülse nicht verwendbar für Kunststofflaugenbehälter, und hier insbesondere für die an dem Kunststofflaugenbehälter angeformten Laschen.

Somit stellt sich für die Erfindung das Problem, einen Kunststofflaugenbehälter hinsichtlich der Befestigung des Schwingungsdämpfers zu verbessern.

Erfindungsgemäß wird dieses Problem gelöst durch den Anspruch 1. Weiterbildungen ergeben sich aus den Unteransprüchen.

Die erfindungsgemäße Ausführungsform ermöglicht die Drehmomentübertragung in den Befestigungspunkten der Stoßdämpfer zur Erzielung der hohen Unwuchtaufnahme. Die Belastung des Kunststoffes und letztendlich die Höhe des übertragbaren Drehmomentes lässt sich durch die Hülse bzw. durch den Bund der Schraube bzw. der Mutter genau und prozesssicher anpassen. Die Kräfte werden über Reibschluss an die Innenseiten der am Laugenbehälter angeformten Laschen abgefangen bzw. übertragen. Das geschieht über die Vorspannkraft der Schraube. Durch diese definierte Vorspannung wird der Kunststoff nur soweit belastet, wie er ohne bzw. geringe bleibende Verformung ertragen kann, und zusätzlich kann ein Drehmoment über die Fläche übertragen werden.

Besonders vorteilhaft ist es bei der so genannten Käfiglösung, dass eine Teile- und Montagezeitreduzierung beim Einsetzen dieser Verbindung erzielt wird, da zwischen dem Befestigungsauge des Schwingungsdämpfers und den Innenflächen der Laschen keine Unterlegscheiben benötigt werden. Hierzu wird im Bereich der benachbarten Laschen zur Übertragung des Stoßdämpferdrehmomentes ein eine S-Form aufweisendes Formteil mit fluchtenden Bohrungen eingebunden. Dabei ist der erste Bogenbereich U-förmig ausgebildet und zwischen den Laschen bzw. zwischen innen liegenden Kunststoffflächen der Laschen angeordnet, wobei der zweite Bogenbereich über das freie Ende einer der Laschen übergreifend angeordnet ist. Aufgrund dieser Formgebung ergibt sich ein einfaches Einsetzen und Positionieren des Formteils.

In Weiterbildung ist an dem zweiten Bogenbereich, der über eine der fluchtenden Schenkelbohrungen hinausragt, eine Haltevorrichtung für die Mutter eines die Bohrungen von Laschen sowie des Formteils durchsetzenden Schraubenschaftes angeordnet. Dadurch ergibt sich eine Verdrehsicherheit der Mutter, wenn über den Schraubenschaft die Verspannung der Befestigung erfolgt. Die Haltevorrichtung ist hierbei für eine Vierkantmutter ausgelegt.

In einer zweckmäßigen Ausführung bilden die Laschen einen Lagerbock, der im Wesentlichen eine U-Form aufweist. Hierdurch wird eine besonders stabile und zuverlässige Befestigung des Schwingungsdämpfers bereitgestellt.

Um insbesondere die Drehmomentkräfte im Bereich des Lagerbocks abzufangen, weisen die fluchtenden Bohrungen des ersten Bogenbereichs, der sich in die U-Form des Lagerbocks zwischen den Laschen einpasst, Durchmesser auf, die dem Innendurchmesser des Befestigungsauges entsprechen. Dies ist insbesondere von Vorteil, wenn im Befestigungsauge eine elastisch gelagerte Gelenkbuchse vorhanden ist, wobei verhindert wird, dass sich diese Buchse in den Kunststoff der Laschen eindrücken bzw. einfressen kann. Somit ist eine feste Anlagefläche gegeben, die auch entsprechend mit dem Schraubenbolzen verspannt werden kann.

In einer vorteilhaften Ausführung weist die fluchtende Bohrung des zweiten Bogenbereichs, der sich übergreifend über eine der fluchtenden Bohrungen des einen Laschenendes erstreckt, einen entsprechenden größeren Durchmesser wie die Laschenbohrungen auf. Der wird dazu genutzt, um mutterseitig eine Flanschhülse in den Bohrungen von Formteil und Schenkel anzuordnen, die die Durchmesserdifferenz im Schraubenschaft überbrückt.

Um die hinreichende Kraft auf den Lagerbock ausüben zu können, weist der Schraubenkopf des Schraubenschaftes eine vergrößerte Anlagefläche auf.

Der Schraubenschaft als solches ist derart ausgebildet, dass sich am Schraubenkopf ein Bereich anschließt, der dem Durchmesserbereich der Laschenbohrung entspricht, an dem sich der Schaft anschließt, dessen Durchmesser dem Innendurchmesser von Befestigungsauge bzw. Gelenkhülse, den Durchmessern der Bohrungen des ersten Bogenbereichs sowie dem der Flanschhülse entspricht.

In einer zweckmäßigen Weiterbildung ist der Schraubenschaft mit einer Hohlkehle an dem größeren Durchmesserbereich angesetzt bzw. am Übergangsbereich zum Bereich mit dem größeren Durchmesser mit einer Hohlkehle versehen.

In einer besonders vorteilhaften Ausführung ist das Formteil aus einem einstückig gebogenen Metallteil hergestellt, so dass infolge des Einsetzens des Formteils einerseits die Muttersicherung als auch die Verspannwirkung im Lagerbock erreicht wird. Es braucht dann lediglich noch der Schraubenschaft durchgeführt werden, um dann mit dem Schraubenkopf das gesamte Befestigungssystem zu verspannen.

In einer zweckmäßigen Weiterbildung ist das Formteil federnd ausgeführt, so dass es im U-förmigen Bereich durch Klemmwirkung gegen die Innenseite der Laschen in seiner Position gehalten wird. Hierdurch kann es bei der Montage nach dem Einsetzen in den Lagerbock nicht verloren gehen.

In einer weiteren zweckmäßigen Weiterbildung ist der zweite Bogenbereich des Formteils federnd ausgeführt, so dass dieser das freie Laschenende auf dessen Außenseite mit einer Klemmwirkung übergreift. Hierdurch wird bei der Montage neben dem sicheren Halt auch die vorbestimmte Position des Formteils in dem Lagerbock beibehalten.

In einer vorteilhaften Ausführung besitzen die Laschen auf den nach innen zugewandten Seiten jeweils einen Führungsvorsprung wodurch der erste Bogenbereich des S-förmigen Formteils positionierbar ist. Dadurch wird das Formteil zuverlässig gegen Verdrehen gesichert. Das Einführen des Formteils wird durch diese Führung ebenfalls erleichtert.

In einer zweckmäßigen Weiterbildung besitzen die freien Ränder der Laschen auf ihren Innenseiten jeweils eine Einführschräge. Dadurch wird das Einsetzen des Stoßdämpferauges in den ersten Bogenbereich des Formteils erleichtert.

In einer vorteilhaften Ausführung sind an der Lasche, die durch den zweiten Bogenbereich umgriffen wird, außenseitig Führungsstege angebracht, zwischen denen die Haltevorrichtung und / oder Mutter einführbar und positionierbar ist. Hierbei wird die käfigartige Haltevorrichtung für die Mutter beim Einsetzen in der richtigen Position geführt, wobei die Stege ein Mitdrehen der Mutter beim Verschrauben verhindern.

In einer weiteren Ausführung ist am freien Ende der Lasche für den zweiten Bogenbereich als Kodiermittel eine Einbuchtung angeordnet, in die der Scheitelbereich des zweiten Bogenbereichs einführbar ist. Die Einbuchtung ist nur an dieser einen Lasche angeordnet und so ausgeführt, dass die Mutter erst dann mit der Bohrung fluchtet, wenn der Scheitelbereich vollständig in der Einbuchtung eingeführt ist. Auf diese Weise wird vermieden, dass das Formteil falsch herum montiert wird.

Ein Ausführungsbeispiel der Erfindung wird anhand der nachstehenden Figuren 1 bis 5 näher erläutert; dabei zeigen:
- Figur 1:: eine schematische Darstellung eines Waschmaschinengehäuses mit innen liegendem Waschaggregat, welches schwingungsgedämpft ist;
- Figur 2:: eine Einzeldarstellung eines angeformten Lagerbocks an einem Kunststofflaugenbehälter;
- Figur 3:: eine geschnittene Darstellung der Befestigung eines Befestigungsauges eines Stoßdämpfers zwischen den Laschen eines Lagerbocks in einer seitlichen Ansicht;
- Figur 4:: eine weitere perspektivische Darstellung der Haltevorrichtung;
- Figur 5:: eine weitere geschnittene Darstellung durch das Befestigungsauge eines Stoßdämpfers und
- Figur 6: eine geschnittene Darstellung der Befestigung in der Draufsicht.

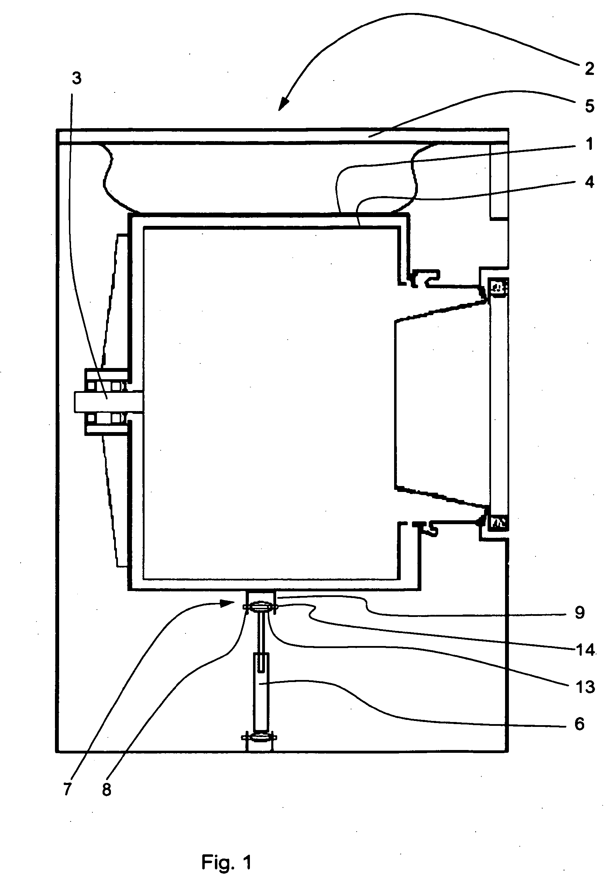

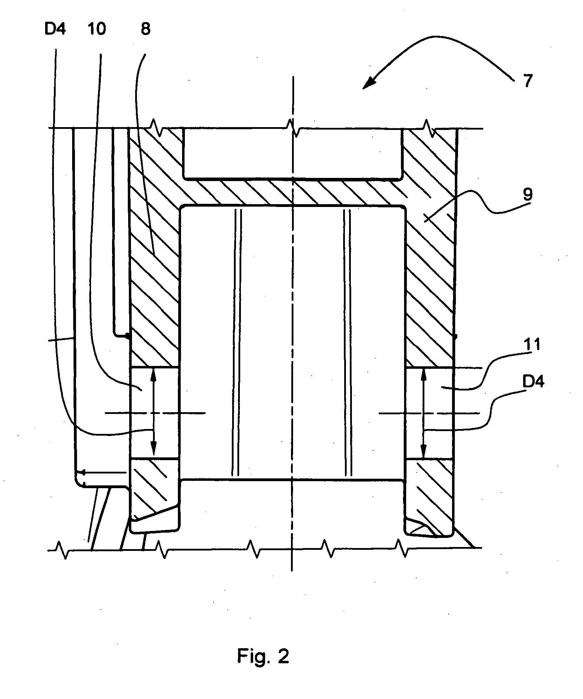

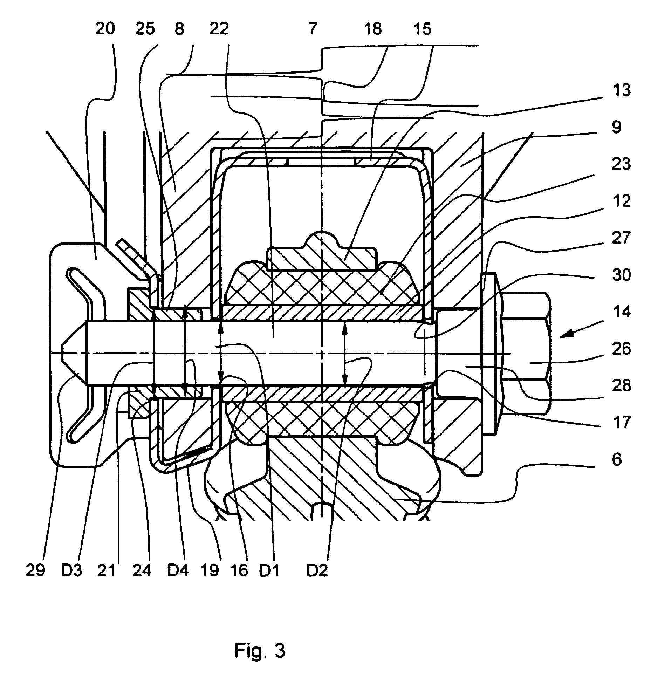

Die Figur 1 zeigt in der Prinzipdarstellung einen Kunststofflaugenbehälter 1 für eine Waschmaschine 2, in dessen horizontaler Achse 3 eine angetriebene Waschtrommel 4 drehbar gelagert ist. Der Kunststofflaugenbehälter 1 ist dabei schwingungsbeweglich in dem Maschinengehäuse 5 angeordnet, wobei wenigstens ein Schwingungsdämpfer 6 an einem Lagerbock 7 am Kunststofflaugenbehälter 1 vorgesehen ist. Wie aus der Prinzipsskizze deutlich zu erkennen ist, umfasst hierbei der Lagerbock 7 im Wesentlichen eine U-Form, durch dessen Laschen 8 und 9 fluchtende Bohrungen 10 und 11 verlaufen, die besser in der Detailansicht der Figur 2 zu erkennen sind. Gemäß Fig. 3 ist zwischen den Laschen 8 und 9 das Befestigungsauge 13 bzw. eine darin eingesetzte elastisch gelagerte Gelenkbuchse 12 angeordnet. Durch die elastisch gelagerte Gelenkbuchse 12 wird innerhalb des Befestigungsauges 13 eine schwingungsgedämpfte Schwenkachse gebildet. Zur Festlegung des Schwingungsdämpfers 6 ist ein die Bohrungen 10 und 11 und die Gelenkbuchse 12 durchsetzendes Befestigungselement 14 am Lagerbock 7 angeordnet.

In Fig. 3 ist dargestellt, dass zur Kraftübertragung bzw. zur Übertragung eines hohen Stoßdämpfermomentes auf die innen liegenden Kunststoffflächen der Laschen 8 und 9 im Bereich des Lagerbocks 7, in dem Lagerbock 7 ein S-förmiges Formteil 15 mit fluchtenden Bohrungen 16 und 17 eingebunden wird, dessen erster Bogenbereich 18, der U-Form des Lagerbocks 7 folgend, zwischen den Innenseiten der Laschen 8 und 9 angeordnet ist, wobei sich der zweite Bogenbereich 19 eines der freien Laschenenden, hier 8, außenseitig übergreifend erstreckt. Somit ergibt sich ein Formteil 15, welches sich formschlüssig einerseits zwischen den Laschen 8 und 9 einfügt, und andererseits gegen Verdrehung durch den übergreifenden zweiten Bogenbereich 19 gesichert ist, wobei auch gewährleistet wird, dass durch diese Formgebung auch eine Selbsthalterung des Formteils 15 im angeformten Lagerbock 7 erzielt wird, um auf diese Weise auch eine leichte Montage der zur Vervollständigung der Befestigung erforderlichen Teile zu ermöglichen. Dabei ist das Formteil 15 aus einem einstückig gebogenen Metallteil hergestellt, wobei die federnde Eigenschaft des Metalls eine Klemmwirkung des ersten Bogenbereichs 18 zwischen den Laschen 8 und 9 und/oder des zweiten Bogenbereichs 19 außenseitig um das freie Ende der einen Lasche 8 bereitstellt.

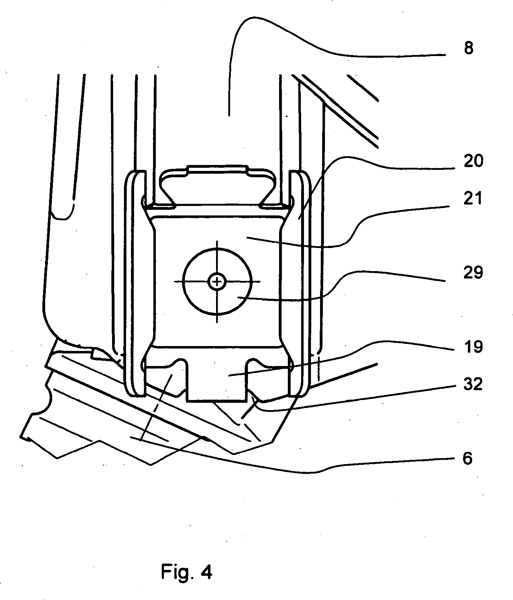

Dabei ist an dem zweiten Bogenbereich 19, der insbesondere über eine der fluchtenden Laschenbohrungen hinausragt, eine als Käfig ausgebildete Haltevorrichtung 20 für eine Mutter 21 angeordnet. In diese Mutter 21 wird der die Bohrungen 10 und 11 von den Laschen 8 und 9 durchsetzende Schraubenschaft 22 eingeschraubt. Dabei ist die Haltevorrichtung 20, so wie sie sich insbesondere in der Figur 4 darstellt, zur Aufnahme einer Vierkantmutter 21 ausgebildet. Wie aus der Figur 3 nun ersichtlich ist, befindet sich in dem Befestigungsauge 13 eine elastisch gelagerte Gelenkbuchse 12, wobei hier um die Gelenkbuchse 12 ein elastomerer Ring 23 gedrückt ist, um den dann das Befestigungsauge 13 des Stoßdämpfers 6 liegt. Somit ergibt sich eine eingefasste Gelenkbuchse 12, die insbesondere ein Drehmoment schwingungsgedämpft auf die Laschen 8 und 9 überträgt.

In Fig. 4 ist in einer seitlichen Ansicht auf die Außenseite der Lasche 8 zu erkennen, dass der zweite Bogenbereich 19 die Lasche 8 zumindest teilweise außenseitig überdeckt. An diesem zweiten Bogenbereich 19 ist die käfigartige Haltevorrichtung 20 angeordnet bzw. einstückig angeformt. In diese Haltevorrichtung ist die Vierkantmutter 21 eingelegt, in deren Gewindeöffnung das freie Schaftende 29 hindurchragt bzw. eingeschraubt ist und über das hinter der Lasche 8 befindliche Befestigungsauge 13 (Fig. 3) des Stoßdämpfers 6 befestigt bzw. lagert. Am freien Ende dieser Lasche 8 ist als Kodiermittel ferner eine Einbuchtung 32 angeordnet, in die der Bereich des Scheitels des zweiten Bogenbereichs 19 eingelegt ist. Die Einbuchtung 32 ist nur an dieser einen Lasche 8 angeordnet und so ausgeführt, dass die Mutter 21 erst dann mit der Bohrung 10 (Fig. 2) fluchtet, wenn sich der Scheitelbereich vollständig in der Einbuchtung 32 befindet. Wenn das Formteil falsch herum montiert wird, dann liegt der Scheitelbereich auf dem freien Ende der Lasche 9 ohne Einbuchtung auf. In diesem Fall ist die Mutter 21 nicht fluchtend mit der Bohrung 11 (Fig. 2) in der Lasche 9 positioniert. Eine Verschraubung ist bei dieser falschen Positionierung des Formteils 15 nicht möglich.

Um insbesondere die Verspannkräfte gezielt auf die Gelenkbuchse 12 bzw. die Innenflächen der Kunststofflaschen 8 und 9 übertragen zu können, weisen die fluchtenden Bohrungen 16 und 17 des ersten Bogenbereichs 18, der sich in die U-Form des Lagerbocks 7 zwischen den Schenkeln 8 und 9 einpasst, jeweils Durchmesser D1 auf, die dem Innendurchmesser D2 der Gelenkbuchse 12 entsprechen. Dies ist deutlich in der Figur 3 zu erkennen, wobei im Wesentlichen eine Bündigkeit zwischen dem Innendurchmesser D2 und dem Durchmesser D1 gegeben ist. Die fluchtende Bohrung 24 des zweiten Bogenbereichs 19, der sich übergreifend über eine der fluchtenden Bohrungen, hier 10, der Lasche 8 erstreckt, weist einen entsprechenden größeren Durchmesser D3 wie die Laschenbohrungen D4 auf. Zu erkennen ist in der Figur 3, dass hierbei mutterseitig eine Flanschhülse 25 in der Bohrung 24 und in der Bohrung 10 der Lasche, hier 8, angeordnet ist, die die Durchmesserdifferenz zwischen D1, D2 und D3, D4 zum Schraubenschaft 22 überbrückt.

Wie aus der Figur 3 zu erkennen ist, weist der Schraubenkopf 26 des Schraubenschaftes 22 eine vergrößerte Anlagefläche 27 auf, die die hinreichende Verschraubungs- bzw. Verspannkraft an die Außenfläche der Lasche 9 bewirkt. Dabei schließt sich an dem Schraubenkopf 26 ein Bereich 28 an, der dem Durchmesserbereich D4 der Laschenbohrung entspricht, an dem sich Schaft 22 anschließt, dessen Durchmesser mit dem Innendurchmesser D2 von der Gelenkbuchse 12, den Durchmessern D1 der Bohrungen 16 und 17 des ersten Bogenbereichs 18, sowie dem der Flanschhülse 25 entspricht.

Wie aus der Figur 3 noch zu erkennen ist, ist Schraubenschaft 22 am Übergangsbereich zum Bereich 28 des Schraubenkopfes 26 mit einer Hohlkehle 30 versehen, wobei der Schaft 22 in seiner weiteren Erstreckung zum Ende einen größeren Durchmesser D2 aufweist.

Es versteht sich nun von selbst, dass, bevor die Befestigung erfolgt, zunächst das Formteil 15 in dem Lagerbock 7 eingesetzt wird. Dann wird an der Lasche 8 die Flanschhülse 25 angesetzt, bevor dann das Befestigungsauge 13 mit seiner elastisch gelagerten Gelenkbuchse 12 zwischen die Laschen 8, 9 so eingesetzt wird, dass der Schraubenschaft 22 durch die fluchtenden Bohrungen 10 und 11 gesetzt werden kann. Ist dies erfolgt, wird lediglich noch eine Mutter 21 in die käfigförmige Haltevorrichtung 20 eingesetzt, die sich beim Anziehen des Schraubenkopfes 26 selbsttätig anzieht. Die Haltevorrichtung 20 ist so ausgelegt, dass die Mutter 21 vorab in einer Vorraststellung darin eingesetzt werden kann und gemeinsam mit dem Formteil 15 in bzw. an den Lagerbock 7 positioniert wird. Die Verspannung der Teile gewährleistet ein schwingungsgedämpftes Drehmoment. Die Kräfte werden dabei von der Gelenkhülse 12 unmittelbar auf das Formteil 15 übertragen, welches wiederum die Kräfte großflächig auf die Innenflächen der Laschen 8, 9 überträgt. Dieses Formteil 15 hat somit insbesondere den Vorteil, dass hohe Verspannkräfte auf einen aus Kunststoff gefertigten Lagerbock 7 bzw. auf die Laschen 8 und 9 übertragen werden können.

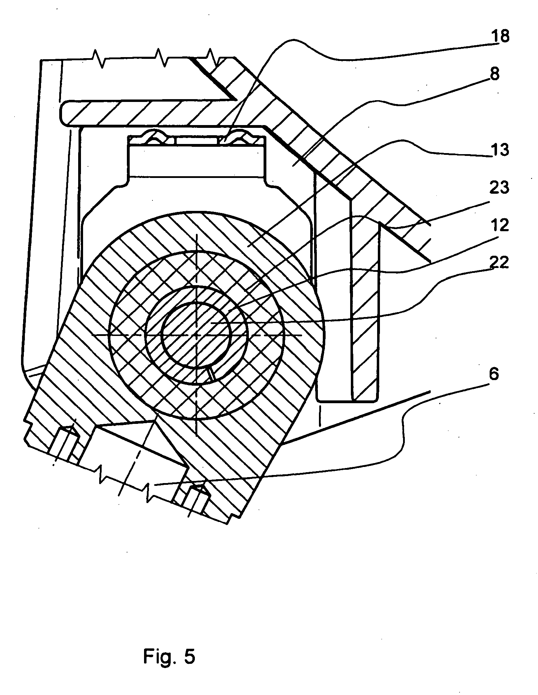

Die Figur 5 zeigt noch einmal in isolierter Schnittdarstellung das Befestigungsauge 13 des Schwingungsdämpfers 6, in dem der elastische Ring 23 liegt, in dem wiederum die Gelenkbuchse 12 eingebunden ist, welche durchsetzt ist von dem Schraubenschaft 22. Hinter dem Befestigungsauge 13 ist ein Teil des ersten Bogebereichs 18 des Formteils 15 (Fig. 3) zu erkennen, welches die seitliche Anlage des Befestigungsauges 13 bzw. der Gelenkbuchse 12 an der Lasche 8 bereitstellt.

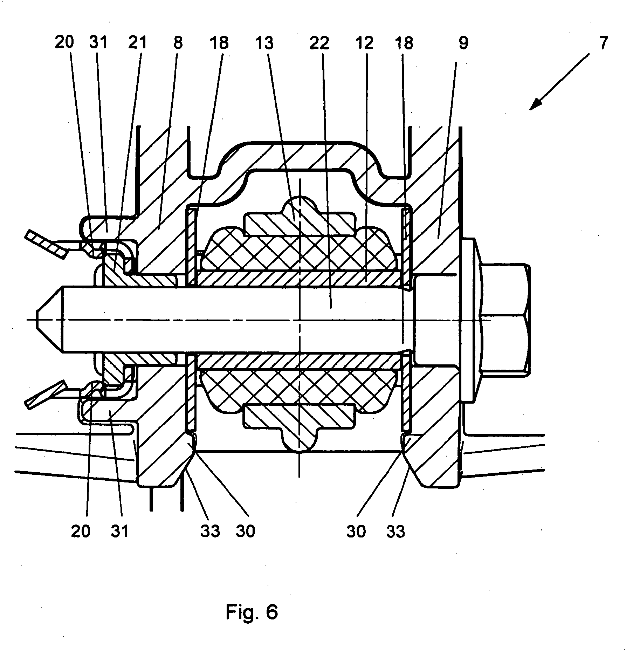

In Fig. 6 ist der Lagerbock 7 als geschnittene Darstellung von oben dargestellt. Alle Richtungsangaben beziehen sich auf die betriebsgemäße Position der Waschmaschine. An den Laschen 8 und 9 sind am freien Rand auf den Innenflächen jeweils Führungsvorsprünge 30 angeordnet. Hinter den Führungsvorsprüngen befindet sich der erste Bogenbereich 18 des Formteils 15 (Fig. 3). Ferner sind an den freien Enden der Laschen 8 und 9 Einführschrägen 33 angeordnet, die das Einführen des Befestigungsauges 13 bzw. der Gelenkbuchse 12 erleichtern. Zusätzlich wird ein Verdrehen des ersten Bogenbereichs 18 um den als Achse wirkenden Schraubenschaft 22 verhindert. An der Außenseite der Lasche 8, die vom zweiten Bogenbereich 19 (Fig. 3) umgriffen wird, sind zwei im Wesentlichen parallel verlaufende Führungsstege 31 angeordnet. Zwischen diesen Führungsstegen 31 wird die Haltevorrichtung 20 mit der Mutter 21 eingeschoben. Neben einer guten Führung wird auch eine Verdrehsicherung für die Mutter 21 beim Einschrauben des Schraubenschaftes 22 erreicht.

## Patentansprüche

1. Kunststofflaugenbehälter (1) für eine Waschmaschine (2), in dessen horizontaler Achse (3) eine angetriebene Waschtrommel (4) drehbar gelagert ist, und der Kunststofflaugenbehälter (1) schwingungsbeweglich in dem Waschmaschinengehäuse (5) angeordnet ist, wobei zur Befestigung wenigstens eines Schwingungsdämpfers (6) an dem Kunststofflaugenbehälter (1) zwei Laschen (8, 9) vorgesehen sind, durch welche fluchtende Bohrungen (10, 11) verlaufen, wobei zwischen den Laschen (8, 9) ein Befestigungsauge (13) des Schwingungsdämpfers (6) angeordnet ist, und zur Festlegung des Schwingungsdämpfers (6) ein die Bohrungen (10, 11) und das Befestigungsauge (13) durchsetzendes Befestigungselement (14) an den Laschen (8, 9) angeordnet ist,
**dadurch gekennzeichnet,**
**dass** an den an dem Kunststofflaugenbehälter (1) angeformten Laschen (8, 9) ein eine S-Form aufweisendes Formteil (15) mit fluchtenden Bohrungen (16, 17) eingebunden ist, dessen erster Bogenbereich (18) eine U-Form besitzt und zwischen den Laschen (8, 9) angeordnet ist, wobei sich der zweite Bogenbereich (19) über das freie Ende einer der Laschen (8, 9) auf deren Außenseite übergreifend erstreckt.

2. Kunststofflaugenbehälter nach Anspruch 1,
**dadurch gekennzeichnet,**
**dass** an dem zweiten Bogenbereich (19), der über eine der fluchtenden Bohrungen (10, 11) hinausragt, eine Haltevorrichtung (20) für die Mutter (21) eines die Bohrungen (10, 11) sowie die Bohrungen (16, 17) des Formteils (15) durchsetzenden Schraubenschaftes (22) angeordnet ist.

3. Kunststofflaugenbehälter nach Anspruch 2,
**dadurch gekennzeichnet,**
**dass** die Haltevorrichtung (20) zur Aufnahme einer Vierkantmutter (21) ausgebildet ist.

4. Kunststofflaugenbehälter nach Anspruch 1,
**dadurch gekennzeichnet,**
**dass** die Laschen (8, 9) einen Lagerbock (7) bilden, der im Wesentlichen eine U-Form aufweist.

5. Kunststofflaugenbehälter nach Anspruch 1 oder 4,
**dadurch gekennzeichnet,**
**dass** die fluchtenden Bohrungen (16, 17) des ersten Bogenbereichs (18), der sich in die U-Form des Lagerbocks (7) zwischen den Laschen (8, 9) einpasst, jeweils einen Durchmesser (D1) aufweisen, der im Wesentlichen dem Innendurchmesser (D2) des Befestigungsauges (13) entspricht.

6. Kunststofflaugenbehälter nach Anspruch 1 oder 2,
**dadurch gekennzeichnet,**
**dass** eine fluchtende Bohrung (24) des zweiten Bogenbereichs (19), der sich übergreifend über eine der fluchtenden Bohrungen (10, 11) eines Laschenendes erstreckt, einen entsprechenden größeren Durchmesser (D3) wie die Durchmesser (D4) der Bohrungen (10, 11) aufweist.

7. Kunststofflaugenbehälter nach Anspruch 6,
**dadurch gekennzeichnet,**
**dass** mutterseitig eine Flanschhülse (25) in den Bohrungen (10, 24) von Formteil (15) und Lasche (8) angeordnet ist, die die Durchmesserdifferenz zum Schraubenschaft (22) überbrückt.

8. Kunststofflaugenbehälter nach Anspruch 2,
**dadurch gekennzeichnet,**
**dass** ein Schraubenkopf (26) des Schraubenschaftes (22) eine vergrößerte Anlagefläche (27) aufweist.

9. Kunststofflaugenbehälter nach Anspruch 8,
**dadurch gekennzeichnet,**
**dass** sich am Schraubenkopf (26) ein Bereich (28) anschließt, der dem Durchmesser (D4) der Laschenbohrung (10, 11) entspricht, an dem sich der Schaft (22) anschließt, dessen Durchmesser dem Innendurchmesser (D2) von Befestigungsauge (12), den Durchmessern (D1) der Bohrungen (16, 17) des ersten Bogenbereichs (18) sowie dem der Flanschhülse (25) entspricht.

10. Kunststofflaugenbehälter nach Anspruch 9,
**dadurch gekennzeichnet,**
**dass** der Schraubenschaft (22) am Übergangsbereich zum Bereich (28) mit dem größeren Durchmesser (D2) mit einer Hohlkehle (30) versehen ist.

11. Kunststofflaugenbehälter nach den Ansprüchen 1 bis 6
**dadurch gekennzeichnet,**
**dass** das Formteil (15) aus einem einstückig gebogenen Metallteil hergestellt ist.

12. Kunststofflaugenbehälter nach Anspruch 1 oder 11,
**dadurch gekennzeichnet,**
**dass** das Formteil (15) im U-förmigen Bereich durch Klemmwirkung gegen die Innenseite der Laschen (8, 9) in seiner Position gehalten wird.

13. Kunststofflaugenbehälter nach Anspruch 1 oder 11,
**dadurch gekennzeichnet,**
**dass** der zweite Bogenbereich (19) des Formteils (15) das freie Laschenende auf dessen Außenseite mit einer Klemmwirkung übergreift.

14. Kunststofflaugenbehälter nach Anspruch 1,
**dadurch gekennzeichnet,**
**dass** die Laschen (8, 9) auf den nach innen zugewandten Seiten jeweils einen Führungsvorsprung (30) besitzen, wodurch der erste Bogenbereich (18) des S-förmigen Formteils (15) positionierbar ist.

15. Kunststofflaugenbehälter nach Anspruch 14,
**dadurch gekennzeichnet,**
**dass** die freien Ränder der Laschen (8,9) auf ihren Innenseiten jeweils eine Einführschräge (33) besitzen.

16. Kunststofflaugenbehälter nach Anspruch 2,
**dadurch gekennzeichnet,**
**dass** an der Lasche (8), die durch den zweiten Bogenbereich (19) umgriffen wird, außenseitig Führungsstege (31) angebracht sind, zwischen denen die Haltevorrichtung (20) und/oder Mutter (21) einführbar und positionierbar ist.

17. Kunststofflaugenbehälter nach Anspruch 1,
**dadurch gekennzeichnet,**
**dass** am freien Ende der Lasche (8) für den zweiten Bogenbereich (19) als Kodiermittel eine Einbuchtung (32) angeordnet ist, in die der Scheitelbereich des zweiten Bogenbereichs (19) einführbar ist.

## Claims

1. A cleaning solution tub (1) made of plastic for a washing machine (2) in whose horizontal axis (3) a driven washing drum (4) is mounted so as to rotate, and the cleaning solution tub (1) made of plastic is arranged so as to vibrate inside the washmachine housing (5), whereby for purposes of fastening at least one vibration absorber (6) on the cleaning solution tub (1) made of plastic, two joint pieces (8, 9) are provided through which flush bores (10, 11) run, whereby a fastening eye (13) of the vibration absorber (6) is arranged between the joint pieces (8, 9) and, for purposes of affixing the vibration absorber (6), a fastening element (14) that traverses the bores (10, 11) as well as the fastening eye (13) is arranged on the joint pieces (8, 9), **characterized in that** an S-shaped molded part (15) with flush bores (16, 17) is integrated into the joint pieces (8, 9) shaped onto the cleaning solution tub (1) made of plastic, and the first arched area (18) of this S-shaped molded part (15) has a U-shape and is arranged between the joint pieces (8, 9), whereby the second arched area (19) extends so as to overlap - on the outside - the free end of one of the joint pieces (8, 9).

2. The cleaning solution tub made of plastic according to claim 1, **characterized in that** a holding device (20) for the nut (21) of one of the flush bores (10, 11) as well as the screw shaft (22) that traverses the bores (16, 17) of the molded part (15) are arranged on the second arched area (19) that extends beyond one of the flush bores (10, 11).

3. The cleaning solution tub made of plastic according to claim 2, **characterized in that** the holding device (20) is configured to accommodate a square nut (21).

4. The cleaning solution tub made of plastic according to claim 1, **characterized in that** the joint pieces (8, 9) form a bearing block (7) that essentially has a U-shape.

5. The cleaning solution tub made of plastic according to claim 1 or 4, **characterized in that** the flush bores (16, 17) of the first arched area (18) - which fits into the U-shape of the bearing block (7) between the joint pieces (8, 9) - each have a diameter (D1) that essentially matches the inner diameter (D2) of the fastening eye (13).

6. The cleaning solution tub made of plastic according to claim 1 or 2, **characterized in that** one flush bore (24) of the second arched area (19) - which overlaps one of the flush bores (10, 11) of one joint piece end - has a correspondingly larger diameter (D3) than the diameters (D4) of the bores (10, 11).

7. The cleaning solution tub made of plastic according to claim 6, **characterized in that**, on the nut side, there is a flanged sleeve (25) in the bores (10, 24) of the molded part (15) and joint piece (8) that serves to bridge the diameter difference relative to the screw shaft (22).

8. The cleaning solution tub made of plastic according to claim 2, **characterized in that** a screw head (26) of the screw shaft (22) has an enlarged contact surface (27).

9. The cleaning solution tub made of plastic according to claim 8, **characterized in that** the screw head (26) is followed by an area (28) that corresponds to the diameter (D4) of the bore (10, 11) in the joint piece that is followed by the shaft (22) whose diameter corresponds to the inner diameter (D2) of the fastening eye (12), to the diameters (D1) of the bores (16, 17) of the first arched area (18) as well as to the diameter of the flanged sleeve (25).

10. The cleaning solution tub made of plastic according to claim 9, **characterized in that** the screw shaft (22) is provided with a channel (30) at the transition area to the area (28) with the larger diameter.

11. The cleaning solution tub made of plastic according to claims 1 to 6, **characterized in that** the molded part (15) is made of a single piece of bent metal.

12. The cleaning solution tub made of plastic according to claim 1 or 11, **characterized in that** the molded part (15) is held in position in the U-shaped area due to the clamping effect against the inside of the joint pieces (8, 9).

13. The cleaning solution tub made of plastic according to claim 1 or 11, **characterized in that** the second arched area (19) of the molded part (15) overlaps the outside of the free joint piece end with a clamping effect.

14. The cleaning solution tub made of plastic according to claim 1, **characterized in that** the sides of the joint pieces (8, 9) facing the inside each have a guide projection (30) as a result of which the first arched area (18) of the S-shaped molded part (15) can be positioned.

15. The cleaning solution tub made of plastic according to claim 14, **characterized in that** the free edges of the joint pieces (8, 9) have an insertion slant (33) on their insides.

16. The cleaning solution tub made of plastic according to claim 2, **characterized in that** external guide webs (31) are installed on the joint piece (8) that is enclosed by the second arched area, and the holding device (20) and/or the nut (21) can be inserted and positioned between said guide webs.

17. The cleaning solution tub made of plastic according to claim 1, **characterized in that** an indentation (32) into which the crown area of the second arched area (19) can be inserted is arranged as a coding means on the free end of the joint piece (8) for the second arched area (19).

## Revendications

1. Cuve de lessivage en matière plastique (1) pour une machine à laver (2), dans l'axe horizontal de laquelle cuve un tambour de lavage (4) entraîné est supporté en rotation, et la cuve de lessivage en matière plastique (1) est disposée de façon mobile en vibration dans le carter de machine à laver (5), deux attaches (8, 9) étant prévues pour la fixation d'au moins un amortisseur de vibrations (6) sur la cuve de lessivage en matière plastique (1) et étant traversées par des alésages (10, 11) alignés, un oeillet de fixation (13) de l'amortisseur de vibrations (6) étant disposé entre les attaches (8, 9), et un élément de fixation (14) traversant les alésages (10, 11) et l'oeillet de fixation (13) étant disposé sur les attaches (8, 9) pour l'immobilisation de l'amortisseur de vibrations (6),
**caractérisée en ce que**,
sur les attaches (8, 9) formées sur la cuve de lessivage en matière plastique (1), une pièce moulée (15) présentant une forme en S est reliée à des alésages (16, 17) alignés, pièce moulée dont la première zone arquée (18) possède une forme en U et est disposée entre les attaches (8, 9), la deuxième zone arquée (19) s'étendant en recouvrement sur l'extrémité libre d'une des attaches (8, 9) sur son côté extérieur.

2. Cuve de lessivage en matière plastique selon la revendication 1,
**caractérisée en ce que**,
sur la deuxième zone arquée (19) qui fait saillie au-delà d'un des alésages (10, 11) alignés, il est disposé un dispositif de retenue (20) pour l'écrou (21) d'une tige de vis (22) pénétrant dans les alésages (10, 11) ainsi que dans les alésages (16, 17) de la pièce moulée (15).

3. Cuve de lessivage en matière plastique selon la revendication 2,
**caractérisée en ce que**
le dispositif de retenue (20) est constitué pour recevoir un écrou quatre pans (21).

4. Cuve de lessivage en matière plastique selon la revendication 1,
**caractérisée en ce que**
les attaches (8, 9) forment un support de palier (7) qui présente essentiellement une forme en U.

5. Cuve de lessivage en matière plastique selon la revendication 1 ou la revendication 4,
**caractérisée en ce que**
les alésages (16, 17) alignés de la première zone arquée (18) qui s'adapte dans la forme en U du support de palier (7) entre les attaches (8, 9) présentent chacun un diamètre (D1) qui correspond essentiellement au diamètre intérieur (D2) de l'oeillet de fixation (13).

6. Cuve de lessivage en matière plastique selon la revendication 1 ou la revendication 2,
**caractérisée en ce**
**qu'**un alésage (24) aligné de la deuxième zone arquée (19) qui s'étend en recouvrement sur un des alésages (10, 11) alignés d'une extrémité d'attache présente un diamètre (D3) correspondant plus grand que les diamètres (D4) des alésages (10, 11).

7. Cuve de lessivage en matière plastique selon la revendication 6,
**caractérisée en ce que**,
côté écrou, il est disposé une douille à bride (25) dans les alésages (10, 24) de la pièce moulée (15) et de l'attache (8), bride qui enjambe la différence de diamètre par rapport à la tige de vis (22).

8. Cuve de lessivage en matière plastique selon la revendication 2,
**caractérisée en ce**
**qu'**une tête de vis (26) de la tige de vis (22) présente une surface de contact (27) agrandie.

9. Cuve de lessivage en matière plastique selon la revendication 8,
**caractérisée en ce que**,
à la tête de vis (26), se raccorde une zone (28) qui correspond au diamètre (D4) de l'alésage d'attache (10, 11) auquel se raccorde la tige (22) dont le diamètre correspond au diamètre intérieur (D2) de l'oeillet de fixation (12), aux diamètres (D1) des alésages (16, 17) de la première zone arquée (18) ainsi qu'au diamètre de la douille à bride (25).

10. Cuve de lessivage en matière plastique selon la revendication 9,
**caractérisée en ce que**
la tige de vis (22) est munie d'une gorge creuse (30) sur la zone de transition vers la zone (28) ayant le plus grand diamètre (D2).

11. Cuve de lessivage en matière plastique selon les revendications 1 à 6,
**caractérisée en ce que**
la pièce moulée (15) est réalisée à partir d'une pièce métallique courbée d'un seul tenant.

12. Cuve de lessivage en matière plastique selon la revendication 1 ou la revendication 11,
**caractérisée en ce que**
la pièce moulée (15) est retenue dans sa position dans la zone en forme de U par une action de serrage contre le côté intérieur des attaches (8, 9).

13. Cuve de lessivage en matière plastique selon la revendication 1 ou la revendication 11,
**caractérisée en ce que**
la deuxième zone arquée (19) de la pièce moulée (15) recouvre l'extrémité libre de l'attache sur son côté extérieur avec une action de serrage.

14. Cuve de lessivage en matière plastique selon la revendication 1,
**caractérisée en ce que**
les attaches (8, 9) possèdent, sur les côté tournés vers l'intérieur, respectivement une saillie de guidage (30) grâce à laquelle la première zone arquée (18) de la pièce moulée (15) en forme de S peut être positionnée.

15. Cuve de lessivage en matière plastique selon la revendication 14,
**caractérisée en ce que**
les bords libres des attaches (8, 9) possèdent respectivement un chanfrein d'insertion (33) sur leurs côtés intérieurs.

16. Cuve de lessivage en matière plastique selon la revendication 2,
**caractérisée en ce que**,
sur l'extérieure de l'attache (8) qui est enveloppée par la deuxième zone arquée (19), il est placé des nervures de guidage (31) entre lesquelles le dispositif de retenue (20) et/ou l'écrou (21) peut être introduit et positionné.

17. Cuve de lessivage en matière plastique selon la revendication 1,
**caractérisée en ce que**,
sur l'extrémité libre de l'attache (8) pour la deuxième zone arquée (19), il est disposé, à titre de moyen de codage, un creux (32) dans lequel la zone de sommet de la deuxième zone arquée (19) peut être introduite.
